# EUROPEAN PATENT APPLICATION

(11) **EP 4 564 238 A1**
(43) Date of publication of application: **04.06.2025**
(21) Application number: 23307068.9
(22) Date of filing: 28.11.2023
(51) Int. Cl.: G06N 10/40

(54) **A SYSTEM FOR IMAGING AN ARRAY OF QUBITS**

(71) Applicant: Pasqal, 91300 Massy (FR)
(72) Inventor: VANEECLOO, Julien, 91300 MASSY (FR); BLOCH, Etienne, 91300 MASSY (FR)
(74) Representative: Lavoix

(57) **Abstract**

The invention relates to a system (16) for imaging an array of qubits, the array of qubits comprising particles, the particles having a first state and a second state, the second state being higher in energy than the first state, the particles being transferred from their second state to their first state by spontaneous emission, the system (16) comprising:
- an excitation device suitable to send an excitation signal on the array of qubits so as to excite particles of the array of qubits from their first state to their second state, the excitation signal being a pulsed beam of coherent light, and
- an imaging device suitable to generate image(s) of particles emitting photons, during passive pulse times, when such particles pass from their second state to their first state by spontaneous emission.

## Description

### TECHNICAL FIELD OF THE INVENTION

The present invention concerns a system for imaging an array of qubits. The present invention also concerns a quantum computer. The present invention also relates to a method for imaging an array of qubits.

### BACKGROUND OF THE INVENTION

Contemporary quantum computers and Noisy Intermediate-Scale Quantum (NISQ) computing devices usually require several elaborate operations to prepare a so-called quantum register for storing qubits before actual computing computations can be performed on the qubits.

For example, each computation cycle comprises: preparing the quantum register in a desired configuration, performing quantum computation operations on the quantum register, and reading out the result of the quantum computation operations.

This computation cycle is generally repeated several times when the quantum computing device is in operation.

There is a need to reduce the time required to prepare the quantum register in order to increase the repetition rate of the quantum computer (e.g., the frequency at which the computation cycles can be repeated on the quantum computing device).

For neutral atom-based quantum computers, the different steps in a computing cycle usually comprise the following:
- (a) A magneto-optical trap (MOT) is loaded to trap and cool down atoms.
- (b) Tweezers are then overlapped with the MOT to load each trap. Stochastically, the traps end up with one atom, with a probability of approximately 50 %.
- (c) The atom array is imaged to identify the empty sites. There is then a rearrangement process to prepare a defect-free pattern.
- (d) The final step consists in a computation task with the atoms array, followed by a measurement or readout of the quantum register to identify the state of each qubit.

In both steps (c) and (d), imaging atoms is generally achieved via fluorescence imaging techniques. The setup is generally quite simple: atoms are trapped in the vacuum chamber. As they are excited with light along an arbitrary direction, the trapped atoms scatter photons in every direction (with a rate of a few MHz at most). A lens (or objective) is then used to collect the light and acquire an image of the atoms with a camera (EMCCD).

This protocol is therefore very sensitive to parasitic stray light, induced by the presence of many components near, or in, the field of view, which can reflect the excitation light. That is the reason why the time to make an image can in some cases exceed 10 milliseconds (ms), to obtain an image with acceptably low amounts of noise. However, a long imaging time increases the total duration of the computing cycle, which is detrimental to the goal of increasing the repetition rate.

### SUMMARY OF THE INVENTION

Hence, there exists a need for a way of reducing the imagery time during a cycle of calculation performed by a quantum processor, without reducing the reliability of the imagery.

To this end, the invention relates to a system for imaging an array of qubits, the array of qubits comprising particles, the particles having a first state and a second state, the second state being higher in energy than the first state, the particles being transferred from their second state to their first state by spontaneous emission, the system comprising:
- an excitation device suitable to send an excitation signal on the array of qubits so as to excite particles of the array of qubits from their first state to their second state, the excitation signal being a pulsed beam of coherent light, the periods of time during which the excitation device emits pulses being called active pulse times and the other periods of time being called passive pulse times, each active pulse time being inferior or equal to three times the lifetime of the particles in the second state, and
- an imaging device suitable to generate image(s) of particles emitting photons, during passive pulse times, when such particles pass from their second state to their first state by spontaneous emission.

The system according to the invention may comprise one or more of the following features considered alone or in any combination that is technically possible:
- the imaging device comprises:
   - a detector, and
   - a temporally separating unit able to prevent light from arriving on the detector during active pulse times and to allow light to arrive on the detector during passive pulse times;
- the temporally separating unit is able to modify the polarization of the light received by the imaging device, differently during active pulse times and during passive pulse times, so as to prevent light from arriving on the detector during active pulse times and to allow light to arrive on the detector during passive pulse times;
- the temporally separating unit comprises:
   - a first unit suitable to receive light coming from the array of qubits and to output only a light having a first polarization, called polarized light,
   - a second unit suitable to obtain an adapted light from the polarized light, the second unit being suitable to be switched between a first configuration during passive pulse times and a second configuration during active pulse times, the first configuration being such that the polarization of the adapted light is the first polarization, the second configuration being such that the polarization of the adapted light is a second polarization, the second polarization being different from the first polarization, and
   - a third unit suitable to send the adapted light to the detector, only when the adapted light has the first polarization;
- the first and the second polarizations are linear perpendicular polarizations;
- the first unit and the third unit comprise an optically polarizing element, preferably a polarizing cube;
- the first unit also comprises a wave plate suitable to receive the light before the optically polarizing element, the wave plate being suitable to modify the polarization of light received by the first unit so as to maximize the portion of light at the output of the optically polarizing element;
- the second unit comprises an electro-optics cell, such as a Pockels cell;
- the temporally separating unit is able to spatially separate the light received by the imaging device, differently during active pulse times and during passive pulse times, so as to prevent light from arriving on the detector during active pulse times and to allow light to arrive on the detector during passive pulse times;
- the temporally separating unit comprises an element configured to be switched between a first configuration during passive pulse times and a second configuration during active pulse times, the first configuration being such that at least a part of the light received by the imaging device from the array of qubits is sent on the detector, the second configuration being such that the light received by the imaging device from the array of qubits is sent at a location which is different from the detector, the element being chosen among an acousto-optic deflector, an acousto-optic modulator and a spatial light modulator;
- the detector comprises an array of photon counters;
- the imaging device comprises:
   - a detector comprising an array of photon counters, and
   - a post-treatment unit configured to process the detections carried out by the detector so as to only keep the detections performed during passive pulse times and to generate the image(s) of the photons emitted during passive pulse times on the basis of the kept detections;
- the excitation device comprises:
   - a laser source able to emit a continuous laser beam, and
   - a pulse shaping unit suitable to temporally modulate the continuous laser beam, according to a specified pulse pattern, to generate the excitation signal.

The invention also relates to a quantum computer comprising:
- a system for generating an array of qubits, the array of qubits comprising particles, the particles having a first state and a second state, the second state being higher in energy than the first state, the particles being transferred from their second state to their first state by spontaneous emission, and
- a system for imaging the array of qubits as previously described.

The invention also relates to a method for imaging an array of qubits, the array of qubits comprising particles, the particles having a first state and a second state, the second state being higher in energy than the first state, the particles being transferred from their second state to their first state by spontaneous emission, the method being carried out by a system as previously described, and comprising the following steps:
- the sending, by the excitation device, of an excitation signal on the array of qubits so as to excite particles of the array of qubits from their first state to their second state, the excitation signal being a pulsed beam of coherent light, the periods of time during which the excitation device emits pulses being called active pulse times and the other periods of time being called passive pulse times, each active pulse time being inferior or equal to three times the lifetime of the particles in the second state, and
- the generation, by the imaging device, of image(s) of particles emitting photons, during passive pulse times, when such particles pass from their second state to their first state by spontaneous emission.

### BRIEF DESCRIPTION OF THE DRAWINGS

The invention will be easier to understand in view of the following description, provided solely as an example and with reference to the appended drawings in which:
- Figure 1 is a schematic view of an example of a quantum computer comprising a system for generating an array of qubits and a system for imaging the array of qubits,
- Figure 2 is a schematic view of an example of a system for imaging an array of qubits, the system comprising an excitation device and an imaging device,
- Figure 3 is a schematic view of an example of an imaging device with a temporally separating unit based on polarization, and
- Figure 4 is a graph of an example representing the probability of an atom to be in an excited state (equivalent to the probability for an atom to emit a photon) for different stages of a method for imaging an array of qubits.

### DETAILED DESCRIPTION OF SOME EMBODIMENTS

In the description, the terms "suitable for", "able to" and "configured for" are considered equivalent.

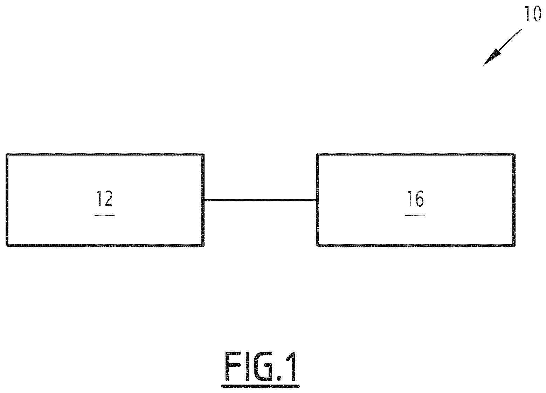

An example of a quantum computer 10 is illustrated on figure 1.

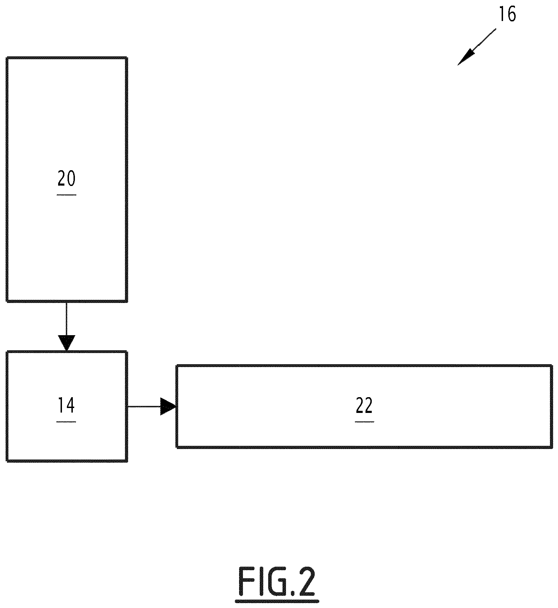

The quantum computer 10 (also called quantum processing unit, or QPU) comprises a system 12 for generating an array of qubits 14 (illustrated on figure 2) and a system 16 for imaging the array of qubits 14.

The system 12 enables to generate an array of qubits 14 (also called a qubit register or a quantum register). By the term "to generate an array of qubits", it is understood to obtain an array of qubits which can be either an initialized array of qubits (before performing calculations) or an array of qubits on which calculations have been performed.

The system 12 for generating an array of qubits 14 comprises, for example, a source of particles, a generator of trapping sites for particles, a rearranging unit (optional) and hardware elements.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber Divers cooling processes can be used to cool the dilute atomic vapor, for instance laser cooling, so that the atoms can be trapped. Other embodiments are nonetheless possible.

The generator of trapping sites is able to generate an array of trapping sites for trapping particles, for example in the vacuum chamber for neutral atoms. Each trapped particle forms a qubit. The array of trapped particles forms an array of qubits 14.

In an example of implementation, the generator of trapping sites comprises a laser source, a beam shaper and a focusing unit.

The laser source is able to generate a laser beam.

The beam shaper is able to shape the laser beam (e.g., to impart a specific phase/intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM). In another example, the beam shaper is an acousto-optical deflector (AOD), or a device with metasurfaces, or micro lens arrays, for example with fixed phase pattern (lithography).

The focusing unit is able to focus the shaped laser beam on a target region of the vacuum chamber so as to generate the array of trapping sites.

The rearranging unit is able to rearrange particles trapped in the trapping sites generated by the generator of trapping sites, so as to obtain a predefined array of qubits 14. The rearranging unit comprises for example optical tweezers (laser) enabling to move the particles from one trapping sites to another until obtaining the predefined array of qubits 14. Other embodiments are nonetheless possible.

The hardware elements enable to manipulate the qubits of the array of qubits 14 so as to perform quantum operations on the qubits. Typically, the quantum computer 10 uses the quantum properties of matter, such as superposition and entanglement, to perform operations on the qubits. In particular, a qubit refers to a two-level quantum system.

In a non-limiting example, a qubit may comprise two basic quantum states l0> and l1> representing the possible quantum states of the qubit. According to the superposition principle of quantum mechanics, any superposition of the form al0> + bl1> (a and b being complex numbers and aa*+bb*=1) is a possible quantum state of the qubit.

Examples of quantum computing devices based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327. Other embodiments are nonetheless possible.

The particles forming the array of qubits have a first state and a second state, the second state being higher in energy than the first state. The particles are transferred from their second state to their first state by spontaneous emission.

For example, the first state is a fundamental state (no excitation) and the second state is an excited state used for the imaging of particles. The second state is different from a Rydberg state used for performing calculations on the quantum register. Other embodiments are nonetheless possible.

The particles are preferably polarizable particles sensitive to alternative current (AC) Stark shift from lasers.

Preferably, the particles are atoms, and in particular electrically neutral atoms. Neutral atoms are, for example, alkali atoms or alkali-earth atoms. Advantageously, the neutral atoms are Rubidium atoms, or Strontium atoms.

In a variant, the particles are trapped particles such as trapped ions, or are molecules.

The system 16 for imaging the array of qubits 14 is suitable for generating images of the array of qubits 14. The images are for example images of the array of qubits 14 taken during the preparation (and rearrangement process) of the array of qubits 14, or taken after a calculation has been performed on the array of qubits 14, or taken when calculations are being performed (for mid-circuit readout, for example between two calculations).

As illustrated on figure 2, the system 16 for imaging the array of qubits 14 comprises an excitation device 20 and an imaging device 22.

The excitation device 20 is suitable to send an excitation signal on the array of qubits 14 so as to excite particles of the array of qubits 14 from their first state to their second state. The particles are then able to de-excite to their first state by spontaneous emission.

The excitation signal is a pulsed beam of coherent light, e.g., a pulsed laser beam. The excitation signal is preferably optimized, in duration and in power, to prepare all the particles in the second state (π pulse). The pulses have a duration (active pulse time) inferior or equal to three times the lifetime of the particles in the second state. Preferentially, each active pulse time is inferior or equal to the lifetime of the particles in the second state. The pulses are typically short pulses, which have for example a duration inferior to 10 nanoseconds.

In this specification, the periods of time during which the excitation device 20 emits pulses are called "active pulse times" and the other periods of time (during which there is no emission of pulses) are called "passive pulse time". In other words, the excitation signal has a first power value during active pulse times and a second power value during passive pulse times, the first power value being higher than the second power value.

Preferably, the excitation signal is pulsed several times during one acquisition with the imaging device 22.

The wavelength of the excitation signal corresponds to an excitation wavelength for the particles (transition between the first state and the second state).

In an example of embodiment, the excitation device 20 comprises:
- a laser source suitable to emit a continuous laser beam, and
- a pulse shaping unit or pulse generation unit suitable to temporally modulate the continuous laser beam, according to a specified pulse pattern, to generate said laser pulses, e.g., to prevent the continuous laser beam from arriving on the array of qubits 14 during passive pulse times and to allow the continuous laser beam to arrive on the array of qubits 14 during active pulse times.

In an example, the pulse shaping unit comprises an acousto-optic modulator (AOM) or an electro-optic modulator (EOM) enabling to generate the pulses.

In another example, the pulse shaping unit can be realized according to the first or the second embodiment of the temporally separating unit that are described later in the description (separation according to the polarization, or spatial separation).

In a variant, the excitation device 20 is a source of pulsed coherent light, e.g., a laser that is already pulsed. Pulsed lasers are lasers which emit light not in a continuous mode, but rather in the form of optical pulses (light flashes).

The imaging device 22 is suitable to generate image(s) of particles of the array of qubits, emitting photons, during passive pulse times, when such particles pass from their second state to their first state by spontaneous emission.

In the following, five examples of embodiments of the imaging device 22 will be described.

### First example of embodiment of the imaging device

In the first embodiment, the imaging device 22 comprises a detector 30 and a temporally separating unit 32.

The detector 30 is suitable to receive light from the array of qubits 14 so as to image the array of qubits 14. In particular, the detector 30 is suitable to detect the fluorescence emitted from particles trapped in trapping sites of the array of qubits 14 and passing from their second state to their first state by spontaneous emission.

The detector 30 comprises, for example, a camera such as a charge-coupled device (CCD) camera, an electron multiplication charged-coupled device (EMCCD) camera, a CMOS camera, or any suitable imaging technology. For example, in the case of atoms, the camera is suitable to detect the fluorescence emitted from the atoms trapped in the trapping sites.

The temporally separating unit 32 is able to prevent light from arriving on the detector 30 during active pulse times and to allow light to arrive on the detector 30 during passive pulse times.

In the first embodiment, the temporal separation is based on polarization. Hence, the temporally separating unit 32 is able to modify the polarization of light received by the imaging device 22, differently during active pulse times and during passive pulse times, so as to prevent light from arriving on the detector 30 during active pulse times and to allow light to arrive on the detector 30 during passive pulse times.

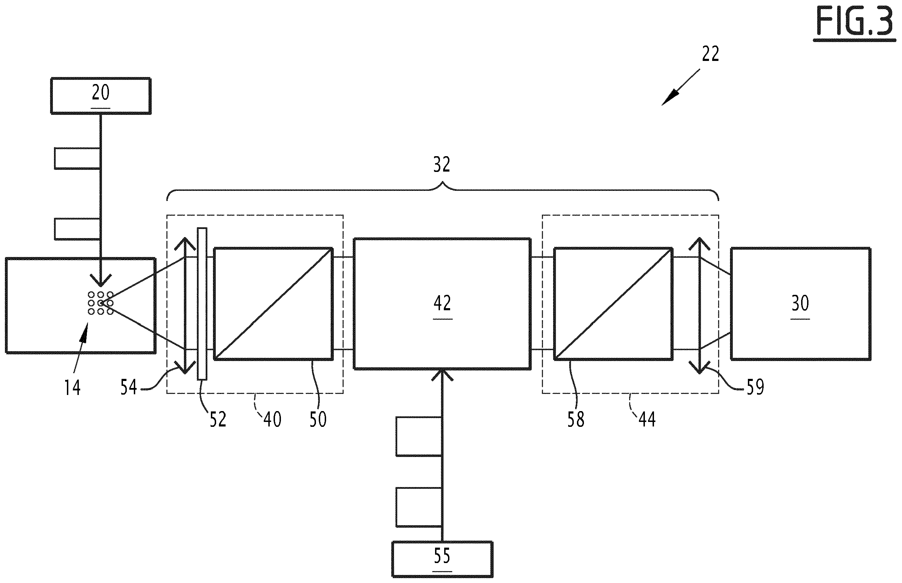

In an example of implementation of the first embodiment, as illustrated on figure 3, the temporally separating unit 32 comprises a first unit 40, a second unit 42 and a third unit 44.

The first unit 40 is suitable to receive light coming from the array of qubits 14 and to output only a light having a first polarization, called polarized light.

In an example, the first unit 40 comprises an optically polarizing element 50, preferably a polarizing cube. A polarizing cube enables to output, on one side of the cube, the light corresponding to a linear polarization (for example vertical) and, on another side of the cube, the light corresponding to an orthogonal linear polarization (for example horizontal).

In the particular example of figure 3, the first polarization is a linear horizontal polarization and the second polarization is a linear vertical polarization. The light having the first polarization is transmitted by the polarizing element 50 to the second unit 42 (and the rest of the light is reflected elsewhere). In a variant, the light having the first polarization is reflected by the polarizing element 50 to the second unit 42 (and the rest of the light is transmitted elsewhere).

Preferably, the first unit 40 also comprises at least a wave plate 52 receiving light before the optically polarizing element 50. The wave plate 52 is suitable to modify the polarization of light received by the first unit 40 so as to maximize the portion of light at the output of the optically polarizing element 50.

For example, the wave plate 52 is a half-wave plate or a quarter-wave plate. Half-wave plates are plates with parallel faces made from a birefringent material that allow a phase delay of λ/2 to be introduced in the light between the two axes of birefringence known as the slow axis and the fast axis. Quarter-wave plates are plates with parallel faces made from a birefringent material that allow a phase delay of λ/4 to be introduced in the light between the slow axis and the fast axis.

For example, the wave plate 52 is a half-wave plate when the polarization of the light received by the first unit 40 is a linear polarization. The wave plate 52 is a quarter-wave plate when the polarization of the light received by the first unit 40 is a circular polarization.

In a variant, the first unit 40 comprises a set of wave plates 52 (at least two).

Preferably, the first unit 40 also comprises an optical unit 54. The optical unit 54 is suitable for collecting light coming from the array of qubits 14. The optical unit 54 is for example a convergent lens or an objective positioned such that the array of qubits 14 is at the focal point of the array of qubits 14.

In the particular example of figure 3, the first unit 40 comprises the wave plate 52, the optically polarizing element 50 and an optical unit 54.

The second unit 42 is suitable to obtain an adapted light from the polarized light depending on the configuration of the second unit 42.

The second unit 42 is suitable to be switched between a first configuration during passive pulse times and a second configuration during active pulse times. The first configuration is such that the polarization of the adapted light is the first polarization. The second configuration is such that the polarization of the adapted light is a second polarization. The second polarization is different from the first polarization.

Preferably, the second polarization is a polarization opposite to the first polarization. Preferably, the first and the second polarizations are linear perpendicular polarizations.

The first configuration corresponds for example to the switch on of the second unit 42 and the second configuration to the switch off of the second unit 42. In a variant, this is the contrary.

The second unit 42 comprises, for example, an electro-optics cell, such as a Pockels cell.

A Pockels cell is a device consisting of an electro-optic crystal (with some electrodes attached to it) through which a light beam can propagate. The phase delay in the crystal can be modulated by applying a variable electric voltage (Pockels effect). The Pockels cell is thus specifically used as a voltage-controlled birefringent material.

Preferably, the temporally separating unit 32 also comprises a controller 55 suitable for switching the second unit 42 between the first and the second configurations. The switching is, for example, synchronized on the active pulse times and the passive pulse times of the excitation signal so that the first configuration corresponds to passive pulse times and the second configuration corresponds to active pulse times. The switching has to be short enough compared to the lifetime of the particles in the second state (for Rubidium atoms, this lifetime corresponds to a duration of about ~25 ns).

The third unit 44 is suitable to send the adapted light to the detector 30, only when the adapted light has the first polarization.

In an example, the third unit 44 comprise an optically polarizing element 58, preferably a polarizing cube, allowing sending to the detector 30 light at the first polarization.

In the particular example of figure 3, the light having the first polarization (obtained with the second unit 42 in the first configuration) is transmitted by the polarizing element 58 to the detector 30 (and the rest of the light is reflected elsewhere). In a variant, the light having the first polarization (obtained with the second unit 42 in the first configuration) is reflected by the polarizing element 50 to the detector 30 (and the rest of the light is transmitted elsewhere). Hence, in both variants, light having the second polarization (obtained with the second unit 42 in the second configuration) is not sent on the detector 30.

Preferably, the third unit 44 also comprises an optical unit 59 for focusing the light at the output of the imaging device 22 on the detector 30. The optical unit 59 is for example a convergent lens or an objective positioned such that the detector 30 is at the focal point of the array of qubits 14.

Hence, in the particular example of figure 3, the third unit 44 comprises the optically polarizing element 58 and the optical unit 59.

### Second example of embodiment of the imaging device

In the second embodiment, the imaging device 22 comprises a detector and a temporally separating unit.

The detector is suitable to receive light from the array of qubits 14 so as to image the array of qubits 14. In particular, the detector is suitable to detect the fluorescence emitted from particles trapped in trapping sites of the array of qubits 14 and passing from their second state to their first state by spontaneous emission.

The detector 30 comprises, for example, a camera such as a charge-coupled (CCD) camera, an electron multiplication charged-coupled device (EMCCD) camera, a CMOS camera, or any suitable imaging technology. For example, in the case of atoms, the camera is suitable to detect the fluorescence emitted from the atoms trapped in the trapping sites.

The temporally separating unit is able to prevent light from arriving on the detector during active pulse times and to allow light to arrive on the detector during passive pulse times.

In the second embodiment, the temporally separating unit is able to spatially separate the light received by the imaging device 22, differently during active pulse times and during passive pulse times, so as to prevent light from arriving on the detector during active pulse times and to allow light to arrive on the detector during passive pulse times.

In an example of implementation of the second embodiment, the temporally separating unit comprises an element configured to be switched between a first configuration during passive pulse times and a second configuration during active pulse times.

The first configuration corresponds for example to the switch on of the element and the second configuration to the switch off of the element. In a variant, this is the contrary.

The first configuration is such that at least a part of the light received by the imaging device 22 from the array of qubits 14 is sent on the detector.

The second configuration is such that the light received by the imaging device 22 from the array of qubits 14 is sent at a location which is different from the detector.

The element is, for example, an acousto-optic deflector (AOD). For example, the first configuration of the AOD corresponds to the switch on of the AOD such that the first order of the light output by the AOD is sent on the detector, the zero order being kept away from the detector. The second configuration of the AOD corresponds to the switch off the AOD such that the light passing in the AOD (zero order) is sent at a location which is different from the detector.

In a variant, the element is an acousto-optic modulator (AOM) or a spatial light modulator (SLM).

### Third example of embodiment of the imaging device

The imaging device 22 according to the third embodiment comprises the same features as the first embodiment, except that the detector is an array of photon counters. A photon counter is a detector suitable to detect each single photon with a high temporal resolution and a high efficiency. Typically, a photon counter emits a pulse of signal for each detected photon.

The use of photon counters enables to reduce the noise (darkcount, afterpulse). In addition, it increases the probability of measuring a photon, and so the quantum efficiency. Furthermore, the readout is faster than with a classical camera and the jitter is low.

### Fourth example of embodiment of the imaging device

The imaging device 22 of the fourth embodiment comprises the same features as the second embodiment, except that the detector is an array of photon counters.

### Fifth example of embodiment of the imaging device

The imaging device 22 of the fifth embodiment comprises a detector and a post-treatment unit.

The detector comprises an array of photon counters.

The post-treatment unit is configured to process the detections carried out by the detector so as to only keep the detections performed during passive pulse times and to generate the images of the particles emitting photons during passive pulse times on the basis of the kept detections.

As an example, the post-treatment aims at analyzing the signal trace by:
- obtaining the value of the signal producing the pulse, and
- when the value is high, the signal on the counter is not taken into account. Otherwise the value is taken into account as being a detection performed during passive pulse times.

An example of a method for imaging an array of qubits 14 using the system 16 for imaging the array of qubits 14, will now be described.

The array of qubits 14 to be imaged is, for example, an array of qubits 14 that is currently being initialized (after the loading of particles in trapping sites), an initialized (rearranged) array of qubits 14, or an array of qubits 14 on which calculations have been performed, or an array of qubits 14 on which calculations are being performed (for mid-circuit readout, for example between two calculations).

In all embodiments, the detector of the imaging device 22 is switched on continuously during the implementation of the imaging method.

The excitation device 20 sends an excitation signal on the array of qubits 14 so as to excite particles of the array of qubits 14 from their first state to their second state.

In the case of atoms, the atoms stay excited typically for a duration of about ~25 ns and then re-emit the excitation as a photon in a random direction.

The imaging device 22 generates image(s) of particles emitting photons, during passive pulse times, when such particles pass from their second state to their first state by spontaneous emission. In particular, in the first to fourth embodiments, the images are obtained directly from the detector, whereas in the fifth embodiment, a post-treatment is carried out.

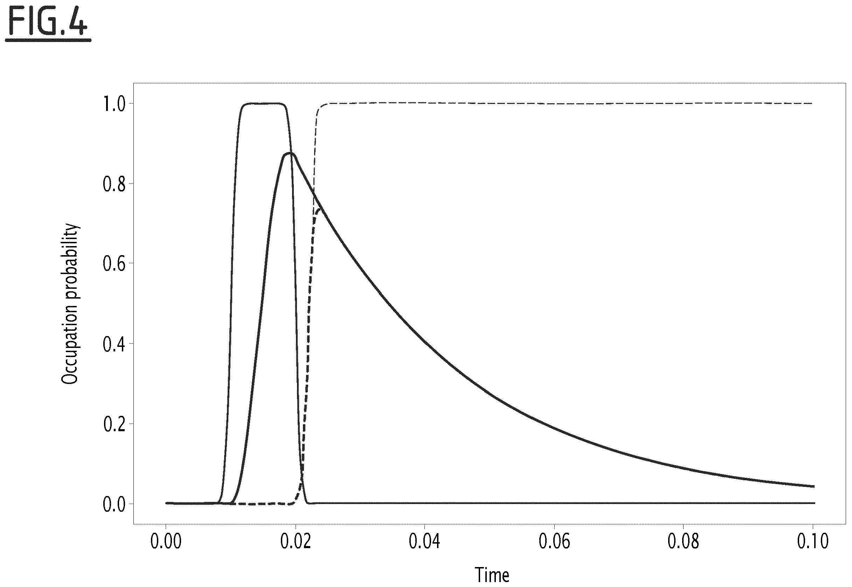

Figure 4 illustrates the results of the implementation of the imaging method with the iimaging device 22 of figure 3 (first embodiment), for one atom. A short pulse (in solid line not bolded, π-pulse) is shaped by an electro-optical modulator (EOM) of the excitation device 20 to prepare the atoms in the excited state (in solid line and in bold). So far, the Pockels cell is switched OFF, photons are not sent to the camera. We assume here an "excitation" duration of 10 ns for a Rabi frequency of 50 MHz. After this, the Pockels cell is switched "ON", to send re-emitted photons towards the detector (black dashed line not bolded). Finally, the proportion of photons collected by the camera is displayed in black bolded dashed line (not taking into account losses in the detection path).

This is advantageously repeated several times during the acquisition time of the detector to collect photons only from the re-emission, thereby getting rid of the background noise with typically an attenuation of 1/10000.

In the example depicted here, as the population in the excited state reaches at most 86%. We therefore can expect to retrieve one photon out of this method 86% of the time.

The probability to get the photon after filtering with the Pockels cell reaches 76% (this does not include optical losses through the system and the collection efficiency).

Hence, the generated images are images of particles emitting photons when the excitation signal is off, which enables reducing the contribution from the background noise. This enables reducing the time needed for imaging particles by the detector, without reducing the reliability of the imaging results, or increasing the reliability of the imaging without increasing the time needed, or any balance of the two.

In particular, in the first to fourth embodiments, the excited light and the re-emitted light (fluorescence) are temporally separated. This enables to distinguish between the two and only keep the relevant. In the fifth embodiment, all the light (background and fluorescence) is sent on the detector, but a post-treatment is achieved on the images obtained from the photon counters to only keep the relevant light.

The imaging system and method rely on coherent excitation, which reduces to zero stimulated emission. Stimulated emission deteriorates the efficiency of fluorescence imaging, since photons are emitted in the mode of the excitation beam. These photons only heat-up atoms and do not contribute to the signal seen by the camera.

It should be noted that several (numerous) pulses can be sent to the particles for one acquisition of the camera. It does not rely on the acquisition time of the imaging device.

Preliminary tests and results have shown that, with methods and devices according to embodiments described herein, the duration of the imaging phase can be reduced by up to two orders of magnitude, thus considerably improving the repetition rate of the QPUs.

In addition, the SNR (Signal to Noise Ratio) would be improved by 25% compared to the state of the art. This noise reduction pushes further the fidelity of imaging.

Finally, the proposed approach removed the costly steps in the design and integration processes when trying to reduce the background noise by adding additional components.

The background level can slightly vary from one setup to the other, and could change for next generation QPUs. The design can integrate some additional components to reduce or limit stray light.

The person skilled in the art will understand that the embodiments and variants described above in the description can all be combined provided that they are technically compatible. Many other embodiments are possible without departing from the scope of the invention defined in the appended claims.

## Claims

1. A system (16) for imaging an array of qubits (14), the array of qubits (14) comprising particles, the particles having a first state and a second state, the second state being higher in energy than the first state, the particles being transferred from their second state to their first state by spontaneous emission, the system (16) comprising:
- an excitation device (20) suitable to send an excitation signal on the array of qubits (14) so as to excite particles of the array of qubits (14) from their first state to their second state, the excitation signal being a pulsed beam of coherent light, the periods of time during which the excitation device (20) emits pulses being called active pulse times and the other periods of time being called passive pulse times, each active pulse time being inferior or equal to three times the lifetime of the particles in the second state, and
- an imaging device (22) suitable to generate image(s) of particles emitting photons, during passive pulse times, when such particles pass from their second state to their first state by spontaneous emission.

2. A system (16) according to claim 1, wherein the imaging device (22) comprises:
- a detector (30), and
- a temporally separating unit (32) able to prevent light from arriving on the detector (30) during active pulse times and to allow light to arrive on the detector (30) during passive pulse times.

3. A system (16) according to claim 2, wherein the temporally separating unit (32) is able to modify the polarization of the light received by the imaging device (22), differently during active pulse times and during passive pulse times, so as to prevent light from arriving on the detector (30) during active pulse times and to allow light to arrive on the detector (30) during passive pulse times.

4. A system (16) according to claim 3, wherein the temporally separating unit (32) comprises:
- a first unit (40) suitable to receive light coming from the array of qubits (14) and to output only a light having a first polarization, called polarized light,
- a second unit (42) suitable to obtain an adapted light from the polarized light, the second unit (42) being suitable to be switched between a first configuration during passive pulse times and a second configuration during active pulse times, the first configuration being such that the polarization of the adapted light is the first polarization, the second configuration being such that the polarization of the adapted light is a second polarization, the second polarization being different from the first polarization, and
- a third unit (44) suitable to send the adapted light to the detector (30), only when the adapted light has the first polarization.

5. A system (16) according to claim 4, wherein the first and the second polarizations are linear perpendicular polarizations.

6. A system (16) according to claim 4 or 5, wherein the first unit (40) and the third unit (44) comprise an optically polarizing element (50, 58), preferably a polarizing cube.

7. A system (16) according to claim 6, wherein the first unit (40) also comprises a wave plate (52) suitable to receive the light before the optically polarizing element (50), the wave plate (52) being suitable to modify the polarization of light received by the first unit (40) so as to maximize the portion of light at the output of the optically polarizing element (50).

8. A system (16) according to any one of claims 4 to 7, wherein the second unit (42) comprises an electro-optics cell, such as a Pockels cell.

9. A system (16) according to claim 2, wherein the temporally separating unit is able to spatially separate the light received by the imaging device (22), differently during active pulse times and during passive pulse times, so as to prevent light from arriving on the detector during active pulse times and to allow light to arrive on the detector during passive pulse times.

10. A system (16) according to claim 9, wherein the temporally separating unit comprises an element configured to be switched between a first configuration during passive pulse times and a second configuration during active pulse times, the first configuration being such that at least a part of the light received by the imaging device (22) from the array of qubits (14) is sent on the detector, the second configuration being such that the light received by the imaging device (22) from the array of qubits (14) is sent at a location which is different from the detector, the element being chosen among an acousto-optic deflector, an acousto-optic modulator and a spatial light modulator.

11. A system (16) according to any one of claims 1 to 10, wherein the detector comprises an array of photon counters.

12. A system (16) according to claim 1, wherein the imaging device (22) comprises:
- a detector comprising an array of photon counters, and
- a post-treatment unit configured to process the detections carried out by the detector so as to only keep the detections performed during passive pulse times and to generate the image(s) of the photons emitted during passive pulse times on the basis of the kept detections.

13. A system (16) according to any one of claims 1 to 12, wherein the excitation device (20) comprises:
- a laser source able to emit a continuous laser beam, and
- a pulse shaping unit suitable to temporally modulate the continuous laser beam, according to a specified pulse pattern, to generate the excitation signal.

14. A quantum computer (10) comprising:
- a system (12) for generating an array of qubits (14), the array of qubits (14) comprising particles, the particles having a first state and a second state, the second state being higher in energy than the first state, the particles being transferred from their second state to their first state by spontaneous emission, and
- a system (16) for imaging the array of qubits (14) according to any one of claims 1 to 13.

15. A method for imaging an array of qubits (14), the array of qubits (14) comprising particles, the particles having a first state and a second state, the second state being higher in energy than the first state, the particles being transferred from their second state to their first state by spontaneous emission, the method being carried out by a system (16) according to any one of claims 1 to 13, and comprising the following steps:
- the sending, by the excitation device (20), of an excitation signal on the array of qubits (14) so as to excite particles of the array of qubits (14) from their first state to their second state, the excitation signal being a pulsed beam of coherent light, the periods of time during which the excitation device (20) emits pulses being called active pulse times and the other periods of time being called passive pulse times, each active pulse time being inferior or equal to three times the lifetime of the particles in the second state, and
- the generation, by the imaging device (22), of image(s) of particles emitting photons, during passive pulse times, when such particles pass from their second state to their first state by spontaneous emission.
